# FASCICULE DE BREVET EUROPEEN

(11) **EP 1 948 988 B1**
(45) Date de publication et mention de la délivrance du brevet: **14.07.2010**
(21) Numéro de dépôt: 06831072.1
(22) Date de dépôt: 07.11.2006
(51) Int. Cl.: F16L 37/00, F16L 37/092, F16L 37/098, F16L 33/22

(54) **ORGANE DE RETENUE A DIMENSION REDUITE POUR ANCRAGE D'UN TUBE DANS UN ELEMENT DE CIRCUIT ET ELEMENT DE CIRCUIT CORRESPONDANT**
HALTEELEMENT MIT KLEINEREN ABMESSUNGEN ZUM VERANKERN EINES ROHRS IN EINEM FLUIDKREISLAUFELEMENT UND ENTSPRECHENDES FLUIDKREISLAUFELEMENT
HOLDING ELEMENT HAVING SMALLER DIMENSIONS FOR ANCHORING A TUBE IN A CIRCUIT ELEMENT AND CORRESPONDING CIRCUIT ELEMENT

(30) Priorité: 15.11.2005 FR 0511551
(43) Date de publication de la demande: 30.07.2008
(73) Titulaire: LEGRIS SA, 35000 Rennes (FR)
(72) Inventeur: MASSON, Dominique, F-35760 Montgermont (FR); LE QUERE, Philippe, F-35830 Betton (FR)
(74) Mandataire: Lavialle, Bruno François Stéphane
(86) Numéro de dépôt international: PCT/FR2006/002470
(87) Numéro de publication internationale: WO 2007/057535

(56) Documents cités:
- EP-A- 0 964 493
- EP-A- 1 378 702
- DE-A1- 19 800 050
- DE-U1- 8 322 203

## Description

La présente invention concerne un organe de retenue d'un tube dans un élément de circuit de transport de fluide et un élément de circuit correspondant. Un tel élément de circuit peut être une conduite, un élément émetteur ou récepteur de fluide tel qu'un distributeur, un actionneur, un réservoir, une électrovanne, une pompe...

### ARRIERE PLAN DE L'INVENTION

Il existe des distributeurs comportant un corps possédant deux faces latérales opposées et planes et délimitant des conduits ayant des extrémités qui débouchent sur le corps entre les deux faces latérales de celui-ci et qui sont équipées de dispositifs de raccordement instantané d'un tube. Ces distributeurs peuvent être rassemblés sur un rail le long duquel ils sont encliquetés et accolés par leurs faces latérales. Dans les circuits de transport de fluide complexes, plusieurs de ces rails peuvent être regroupés dans des armoires afin de faciliter la maintenance du circuit. Les circuits, dont la complexité augmente, incorporent un nombre croissant de distributeurs qui rend nécessaire de diminuer l'épaisseur des distributeurs (définie entre les faces latérales du corps de ceux-ci) pour réduire l'encombrement des armoires qui les hébergent.

Or, il apparaît que l'épaisseur du corps d'un distributeur est déterminée par l'encombrement du dispositif de raccordement instantané. Un tel dispositif de raccordement comprend un organe de retenue du tube qui est généralement constitué par une rondelle d'accrochage ou une pince. Une rondelle d'accrochage est une rondelle élastiquement déformable ayant une circonférence interne divisée en dents d'accrochage du tube. Une pince est une douille ayant une extrémité pourvue d'une collerette et une extrémité opposée à partir de laquelle s'étendent axialement des fentes parallèles qui délimitent entre elles des bras déformables. Chaque bras a une extrémité solidaire de la collerette et une extrémité libre pourvue d'un redan interne. Quel que soit le type de l'organe de retenue, il a une forme annulaire pour s'étendre sur tout le pourtour d'une zone du tube et possède un diamètre externe très supérieur à celui du tube. Il apparaît que l'encombrement des moyens de raccordement instantané, transversalement au tube, est déterminé par les dimensions transversales de l'organe de retenue. Or, ces organes de retenue ont actuellement des dimensions minimales qui, compte tenu de leur géométrie, ne peuvent plus être réduites.

Par ailleurs, il est connu du document DE-U-83 22 203 un organe de retenue d'un tube dans un élément de circuit, l'organe de retenue comportant une partie porteuse à partir de laquelle s'étend au moins un moyen d'accrochage latéral du tube. La partie porteuse a une forme en C qui risque de s'ouvrir et d'affaiblir l'action des moyens d'accrochage.

### OBJET DE L'INVENTION

Il serait donc intéressant de disposer d'un organe de retenue présentant un encombrement transversal réduit.

### RESUME DE L'INVENTION

A cet effet, on prévoit, selon l'invention, un organe de retenue d'un tube dans un élément de circuit, l'organe de retenue comportant une partie porteuse à partir de laquelle s'étend au moins un moyen d'accrochage latéral du tube, la partie porteuse ayant en section transversale une forme sensiblement annulaire continue et présentant une direction transversale active sur laquelle est disposé le moyen d'accrochage et une direction transversale inactive de plus petite dimension externe et selon laquelle la partie porteuse est dépourvue de moyens d'accrochage.

De la sorte, l'organe de retenue présente, dans la direction inactive, une dimension externe plus faible que celle nécessaire dans la direction active pour l'action des moyens d'accrochage. L'élément de circuit destiné à recevoir un tel organe de retenue une relativement faible dimension transversale dans la direction inactive de l'organe de retenue. La continuité de la partie porteuse permet au moyen d'accrochage d'être fermement et efficacement engagé avec le tube.

Ainsi, l'invention a également pour objet un élément de circuit de transport de fluide, comprenant un corps qui délimite un conduit et présente une plus petite dimension externe selon une direction transversale au conduit, le corps étant équipé d'un organe du type précité pour retenir un tube dans le conduit, l'organe de retenue étant monté sur le corps de l'élément de circuit de telle manière que la direction inactive de l'organe de retenue soit parallèle à la direction de plus petite dimension du corps de l'élément de circuit.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels :
- la figure 1 est une vue schématique en perspective d'un élément de circuit conforme à un premier mode de réalisation de l'invention,
- la figure 2 est une vue en éclaté de cet élément de circuit,
- la figure 3 est une vue partielle en perspective, avec écorché, de cet élément de circuit,

- la figure 4 est une vue en perspective de l'organe de retenue de cet élément de circuit,
- la figure 5 est une vue en perspective d'un élément de circuit conforme à un deuxième mode de réalisation de l'invention,

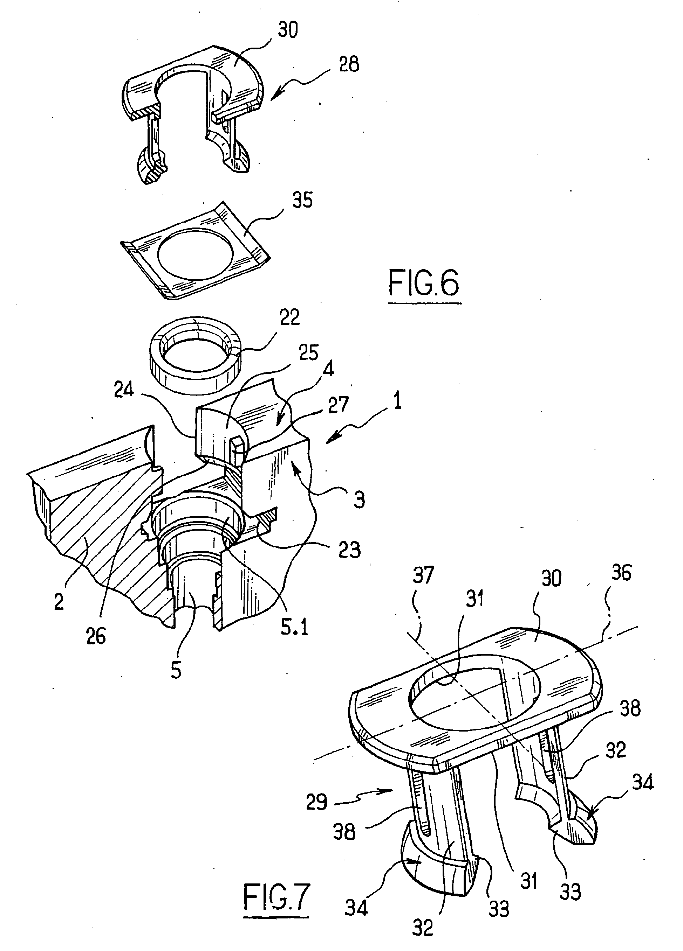

- la figure 6 est une vue en perspective et en éclaté, avec un écorché, de cet élément,
- la figure 7 est une vue en perspective de l'organe de retenue de cet élément de circuit,
- la figure 8 est une vue de dessus d'une variante de l'organe de retenue de l'élément de circuit selon le premier mode de réalisation,
- la figure 9 est une vue en coupe longitudinale d'une variante de l'organe de retenue de l'élément de circuit selon le deuxième mode de réalisation.

### DESCRIPTION DETAILLEE DE L'INVENTION

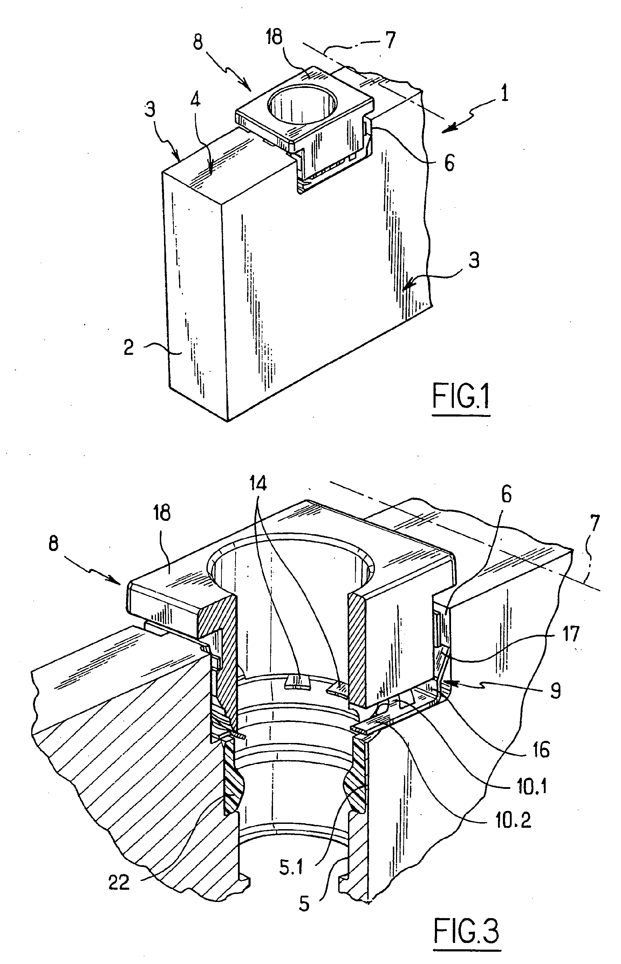

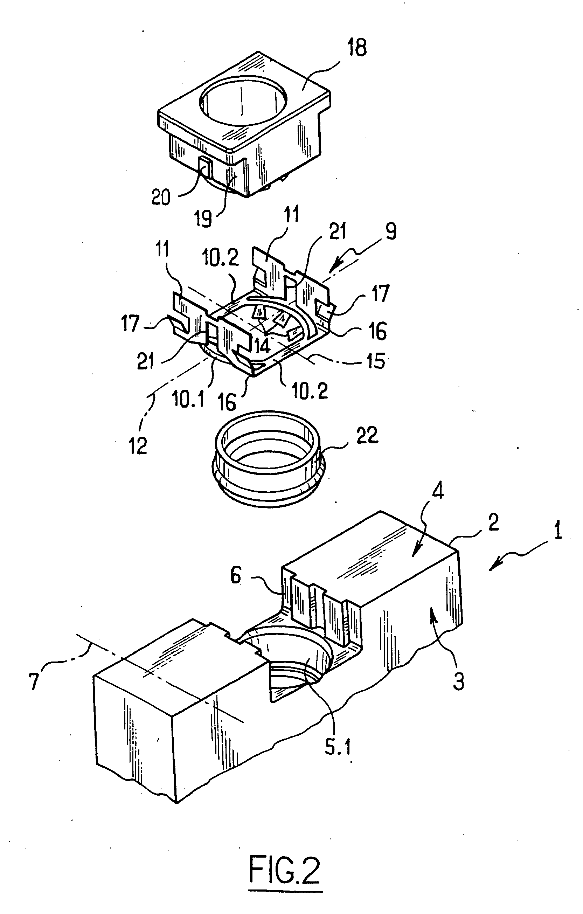

Les figures 1 à 3 représentent un élément de circuit généralement désigné en 1, tel qu'un distributeur, comportant un corps 2 ayant une forme sensiblement parallélépipédique. Le corps 2 comprend deux faces latérales 3, planes et parallèles, et une face supérieure 4. Le corps 2 délimite un conduit 5 débouchant perpendiculairement dans une encoche 6 ménagée dans le corps 2 à partir de la face supérieure 4. Les faces latérales 3 sont espacées d'une distance (mesurée selon la direction 7, constitue l'épaisseur de l'élément de circuit 1) formant la plus petite dimension du corps 2 transversalement au conduit 5.

L'encoche 6 reçoit un dispositif, généralement désigné en 8, de raccordement instantané d'un tube (non représenté sur les figures) au conduit 5.

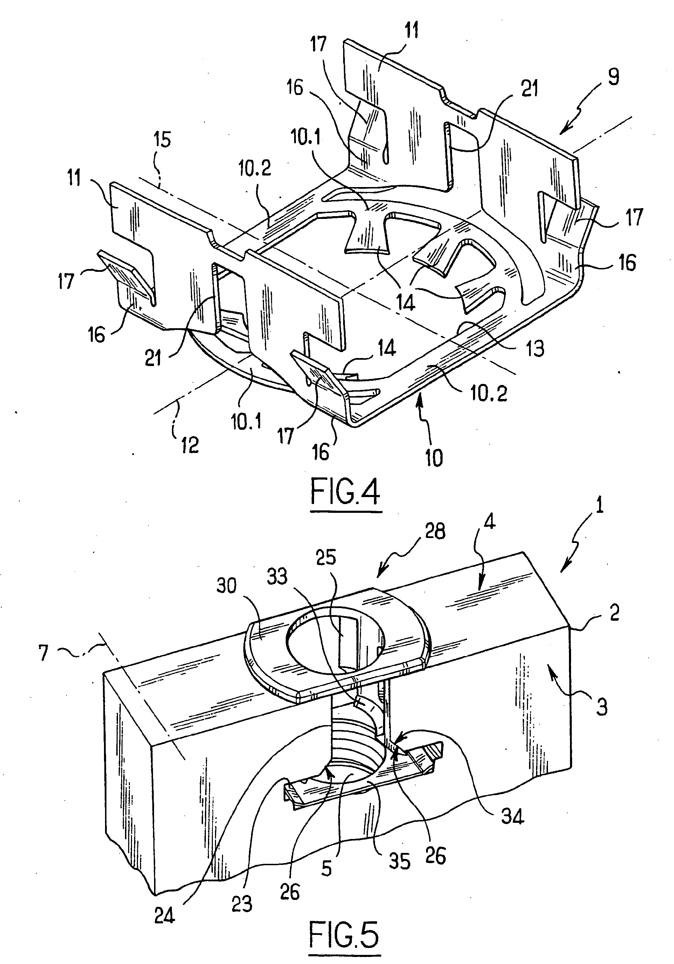

En référence également à la figure 4, le dispositif de raccordement 8 comprend une armature., généralement désigné en 9, formée d'une tôle emboutie possédant une partie centrale 10 à partir de laquelle s'étendent perpendiculairement deux rebords latéraux 11 opposés. La partie centrale 10 comprend deux portions en arc de cercle 10.1 opposées l'une à l'autre selon une direction 12 et deux portions rectilignés 10.2 parallèles réunissant les portions en arc de cercle 10.1. Les portions 10.1, 10.2 délimitent une ouverture 13 en saillie dans laquelle s'étendent des dents 14 solidaires des portions en arc de cercle 10.1. La partie centrale 10 forme ainsi une partie porteuse des dents 14, et présente en section transversale une forme annulaire continue. Les dents 14 sont agencées pour mordre la surface externe du tube destiné à être raccordé au conduit 5. La continuité de la partie centrale 10, qui est donc relativement résistante aux déformations, permet d'appliquer fortement les dents 14 contre la paroi du tube, ce qui facilite la pénétration des dents 14 dans celle-ci. Les dents 14 sont disposées en deux groupes diamétralement opposés et rassemblés autour de la direction 12 pour délimiter une section de passage inférieure à la section du tube. La direction 12 est appelée direction active d'accrochage. Les portions rectilignes 10.2 sont dépourvues de dents et sont perpendiculaires à une direction 15 elle-même perpendiculaire à la direction active d'accrochage 12. La direction 15 est appelée direction inactivé d'accrochage. Les portions rectilignes 10.2 sont écartées d'une distance, selon la direction 15, sensiblement égale au diamètre externe du tube alors que les portions en arc de cercle sont espacées d'une distance légèrement inférieure à la somme du diamètre externe du tube et de deux longueurs de dents 14. L'armature 9 présente une plus petite dimension externe selon la direction inactive d'accrochage 15. Cette plus petite dimension externe est sensiblement égale à l'épaisseur définie entre les faces latérales 3.

Les rebords latéraux 11 sont reliés à la partie centrale 10 par des pattes recourbées 16 qui s'étendent dans le prolongement des portions rectilignes 10.2 afin de ne pas entraver la déformation des portions en arc de cercle 10.1 lors de l'introduction d'un tube. Des dents d'ancrage 17 sont découpées dans les bords latéraux 11 pour s'étendre en saillie vers l'extérieur de ceux-ci dé manière à mordre dans les flancs de l'encoche 6 pour assurer la retenue de l'armature 9 dans l'encoche 6 de telle manière que la partie centrale 10 de l'armature 9 se trouve au niveau du débouché du conduit 5 dans l'encoche 6.

L'armature 9 reçoit à coulissement un poussoir 18 délimitant un canal de réception du tube à raccorder au conduit 5 et possédant deux faces latérales 19 opposées pour coopérer par glissement avec les rebords latéraux 11 de l'armature. Un ergot 20 s'étend en saillie de chaque face latérale 19 du poussoir 18 pour être reçu à coulissement dans une rainure 21 ménagée dans le rebord latéral 11 correspondant. La rainure 21 s'étend parallèlement à l'axe central de l'ouverture 13 afin d'assurer la retenue du poussoir 18 sur l'armature 9 et le guidage en coulissement du poussoir 18 entre une position de connexion dans laquelle le poussoir 18 est en léger appui contre les dents 14 (les dents 14 ont tendance à rappeler le poussoir 18 dans la position de connexion) et une position de déconnexion dans laquelle le poussoir 18 est enfoncé et soulève les dents 14 de manière à augmenter la section de passage définie par celles-ci.

Le dispositif de raccordement comprend en outre un élément d'étanchéité annulaire 22 qui possède un diamètre interne légèrement inférieur au diamètre externe du tube et qui est reçu dans un chambrage d'extrémité 5.1 du conduit 5. La partie centrale 10 maintient l'élément d'étanchéité annulaire 22 dans le chambrage d'extrémité 5.1.

Lorsque le tube est engagé dans le poussoir 18 en position de connexion, l'ouverture 13, l'élément d'étanchéité 22 puis le conduit 5, les dents 14 mordent la surface extérieure du tube et la partie centrale 10 forme un organe de retenue du tube dans le conduit 5.

Pour déconnecter le tube, le poussoir 18 est enfoncé en position de déconnexion et déplace l'extrémité libre des dents 14 pour dégager celles-ci du tube de manière que le tube puisse être extrait.

Les éléments identiques ou analogues à ceux précédemment décrits porteront la même référence numérique dans la description qui suit du deuxième mode de réalisation.

Dans ce mode de réalisation, le chambrage d'extrémité 5.1 accueillant l'élément annulaire d'étanchéité 22 débouche dans un premier logement 23 débouchant sur la face supérieure 4 par un second logement 24.

Le logement 24 est défini par deux parois 25 en portion de cylindre se raccordant au logement 23 par des surfaces de raccord 26 en portion de tronc de cône. Un ergot 27 s'étend en saillie de chaque paroi 25. Le logement 24 reçoit à coulissement un organe de retenue généralement désigné en 28.

Dans ce mode de réalisation, l'organe de retenue 28 comprend une partie tubulaire 29, de diamètre externe légèrement inférieure au diamètre des parois 25, dont une première extrémité est en saillie à l'extérieur du corps 2 et une deuxième extrémité est en saillie dans le logement 23. La première extrémité comporte une collerette 30 qui présente en section transversale une forme sensiblement annulaire continue. Deux larges fentes 31 s'étendent axialement dans la partie tubulaire depuis la deuxième extrémité pour former deux bras 32 diamétralement opposés ayant une extrémité reliée à la collerette 30 et une extrémité opposée libre. La collerette 30 forme une partie porteuse des bras 32. L'extrémité libre est pourvue d'un redan 33 en saillie vers l'intérieur et d'une surface tronconique externe 34 se rétrécissant en direction de la collerette 30 pour coopérer avec les surfaces de raccord 26. Les redans 33 délimitent une section de passage légèrement inférieure à celle du tube. Dans chaque bras 32 est ménagée une fente axiale pour accueillir l'ergot 27 correspondant. La largeur des bras 32 est inférieure à l'épaisseur du corps 2. Les bras 32 sont disposés sur la direction transversale 36 qui forme la direction d'accrochage active de l'organe de retenue 28, la direction inactive d'accrochage 37 étant la direction transversale perpendiculaire à la direction active d'accrochage 36. On notera que la collerette 30 possède deux méplats opposés perpendiculaire à la direction inactive d'accrochage 37 de sorte que la collerette 30 a une plus petite dimension dans la direction inactive d'accrochage 36.

Le logement 23 débouche également sur les faces latérales 4 et reçoit une armature 35, en forme de tôle percée d'une ouverture pour le passage du tube, assurant la retenue de l'élément d'étanchéité annulaire 22 dans le chambrage d'extrémité 5.1.

Lorsque le tube est engagé dans l'organe de retenue 28 en position de connexion, l'armature 35, l'élément d'étanchéité 22 puis le conduit 5, les redans 33 mordent la surface extérieure du tube. Lors de la mise sous pression du circuit dans lequel l'élément de circuit 1 est implanté, le tube recule légèrement en entraînant l'organe de retenue 28. Les surfaces tronconiques externes 34 glissent sur les surfaces de raccord 26 qui rapprochent les bras 32 en augmentant le serrage exercé sur le tube par ceux-ci.

Pour déconnecter le tube, l'organe de retenue 28 est enfoncé par appui sur la collerette 30 de manière que les bras desserrent le tube. Le tube peut alors être extrait.

Bien entendu, l'invention n'est pas limitée aux modes de réalisation décrits et on peut y apporter des variantes de réalisation sans sortir du cadre de l'invention tel que défini par les revendications.

Dans le premier mode de réalisation, les dents peuvent être déformables en elles-mêmes ou se comporter comme des palettes rigides qui peuvent basculer autour des portions en arc de cercle 10.1 si les portions en arc de cercle 10.1 sont suffisamment flexibles. Les dents peuvent également être solidaires des rebords 11 ou plus généralement d'une partie rigide. Les dents peuvent également avoir une forme différente, délimitée par exemple par des bords latéraux parallèles ou convergents vers leurs extrémités libres.

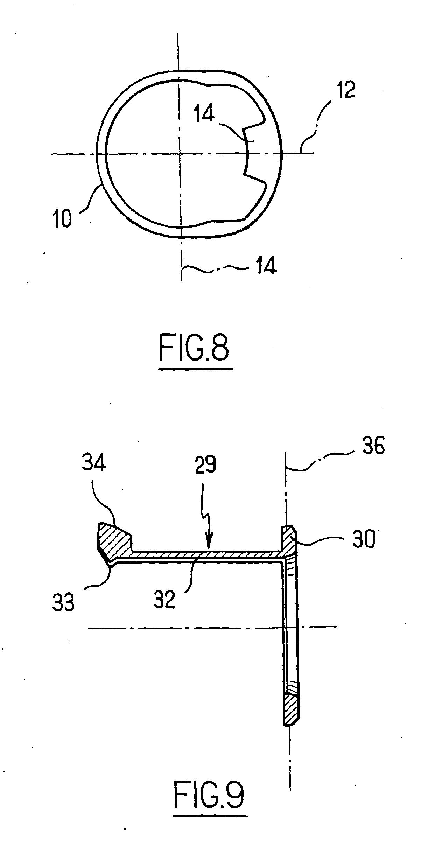

En variante, le nombre de moyens d'accrochage peut être différent. La rondelle peut ne comprendre qu'une dent (voir la figure 8), de même que l'organe de retenue tubulaire peut ne comprendre qu'un bras (voir la figure 9).

## Revendications

1. Organe de retenue (10, 28) d'un tube dans un élément de circuit, l'organe de retenue comportant une partie porteuse (10 ; 30) à partir de laquelle s'étend au moins un moyen d'accrochage latéral (14, 33) du tube, la partie porteuse (10; 30) présentant une direction transversale active (12, 36) sur laquelle est disposé le moyen d'accrochage et une direction transversale inactive (15, 37) selon laquelle la partie porteuse est dépourvue de moyens d'accrochage et présente une plus petite dimension externe, **caractérisé en ce que** la partie porteuse a en section transversale une forme sensiblement annulaire continue.

2. Organe de retenue (10) selon la revendication 1, comprenant plusieurs moyens d'accrochage (14) concentrés autour de la direction active.

3. Organe de retenue (10) selon la revendication 1, la partie porteuse (10) a une circonférence interne à partir de laquelle s'étend en saillie au moins une dent (14) formant le moyen d'accrochage.

4. Organe de retenue (28) selon la revendication 1, de forme sensiblement tubulaire comprenant une collerette (30) formant la partie porteuse, percée d'un orifice de passage du tube, et au moins un bras (32) s'étendant en saillie axiale de la collerette et possédant une extrémité libre pourvue d'un redan (33) formant le moyen d'accrochage.

5. Elément de circuit de transport de fluide (1), comprenant un corps (2) qui délimite un conduit (5) et présente une plus petite dimension externe selon une direction (7) transversale au conduit, le corps étant équipé d'un organe de retenue (10, 28) d'un tube dans le conduit, **caractérisé en ce que** l'organe de retenue est conforme à l'une quelconque des revendications précédentes et est monté sur le corps de l'élément de circuit de telle manière que la direction inactive (15, 37) de l'organe de retenue soit parallèle à la direction de plus petite dimension du corps de l'élément de circuit.

## Claims

1. A retaining member (10, 28) for retaining a tube in a circuit element, the retaining member comprising a carrier portion (10; 30) from which there extends at least one lateral anchoring means (14, 33) for anchoring the tube, the carrier portion presenting an active transverse direction (12, 36) on which the anchoring means is disposed and an inactive transverse direction (15, 37) on which the carrier portion does not have anchoring means and presents a smallest outside dimension, **characterized in that** the carrier portion is substantially in the form of a continuous annulus.

2. A retaining member (10) according to claim 1, including a plurality of anchoring means (14) concentrated around the active direction.

3. A retaining member (10) according to claim 1, in which the carrier portion (10) has an inside circumference from which there projects at least one tooth (14) forming the anchoring means.

4. A retaining member (28) according to claim 1, of substantially tubular shape, comprising a collar (30) forming the carrier portion and pierced by a tube-passing orifice, and at least one arm (32) projecting axially from the collar and possessing a free end provided with a rim (33) forming the anchoring means.

5. A fluid transport circuit element (1) comprising a body (2) that defines a duct (5) and presents a smallest outside dimension in a direction (7) that extends transversely relative to the duct, the body being fitted with a retaining member (10, 28) for retaining a tube in the duct, wherein the retaining member is in accordance with claim 1 and is mounted on the body of the circuit element in such a manner that the inactive direction (15, 37) of the retaining member is parallel to the smallest-dimension direction of the body of the circuit element.

## Patentansprüche

1. Halteelement (10, 28) zum Halten eines Rohres in einem Leitungskreiselement, wobei das Halteelement einen tragenden Abschnitt (10; 30) umfasst, von dem sich mindestens ein seitliches Verankerungselement (14, 33) zum Verankern des Rohres erstreckt, wobei der tragende Abschnitt (10; 30) eine aktive Querrichtung (12, 36) aufweist, an der das Verankerungselement angeordnet ist, sowie eine inaktive Querrichtung (15, 37), in der der tragende Abschnitt ohne Verankerungselemente ist und einen kleineren Außendurchmesser aufweist, **dadurch gekennzeichnet, dass** der tragende Abschnitt im Querschnitt eine im Wesentlichen ringförmige kontinuierliche Form hat.

2. Halteelement (10) nach Anspruch 1, umfassend mehrere Verankerungselemente (14), die um die aktive Richtung herum konzentriert sind.

3. Halteelement (10) nach Anspruch 1, wobei der tragende Abschnitt (10) einen Innenumfang hat, von dem sich mindestens ein Zahn (14) erstreckt, der das Verankerungselement bildet.

4. Halteelement (28) nach Anspruch 1, mit im Wesentlichen rohrförmiger Form, umfassend einen Flansch (30), der den tragenden Abschnitt bildet und von einer Öffnung zum Durchtritt des Rohres durchsetzt ist, sowie mindestens einen Arm (32), der axiale von dem Hals absteht und ein freies Ende hat, das mit einem Vorsprung (33) versehen ist, der das Verankerungselement bildet.

5. Fluidleitungskreiselement (1), umfassend ein Gehäuse (2), das eine Leitung (5) begrenzt und in einer Querrichtung (7) zur Leitung einen kleineren Außendurchmesser aufweist, wobei das Gehäuse mit einem Halteelement (10, 28) zum Halten eines Rohres in der Leitung ausgestattet ist, **dadurch gekennzeichnet, dass** das Halteelement gemäß einem der vorhergehenden Ansprüche ausgebildet und an dem Gehäuse des Kreislaufelements derart angebracht ist, dass die inaktive Richtung (15, 37) des Halteelements parallel zur Richtung der kleineren Abmessung des Gehäuses des Kreislaufelements ist.
